# EUROPEAN PATENT SPECIFICATION

(11) **EP 3 538 365 B1**
(45) Date of publication and mention of the grant of the patent: **08.04.2020**
(21) Application number: 17805353.4
(22) Date of filing: 09.11.2017
(51) Int. Cl.: B32B 27/32, C08L 23/12

(54) **FILM COATED MINERAL-ENTRAINED POLYMERS AND METHODS OF MAKING THE SAME**
FILMBESCHICHTETE MIT MINERAL VERSETZTE POLYMERE UND VERFAHREN ZUR HERSTELLUNG DAVON
POLYMÈRES À ENTRAÎNEMENT MINÉRAL REVÊTUS D'UN FILM ET LEURS PROCÉDÉS DE FABRICATION

(30) Priority: 09.11.2016 US 201662419596 P
(43) Date of publication of application: 18.09.2019
(73) Proprietor: CSP Technologies, Inc., Auburn, Alabama 36832 (US)
(72) Inventor: KIBELE, Ralf, 83052 Bruckmuehl (DE)
(74) Representative: Maiwald Patent- und Rechtsanwaltsgesellschaft mbH
(86) International application number: PCT/US2017/060961
(87) International publication number: WO 2018/089707

(56) References cited:
- WO-A1-2014/152539
- US-A- 6 080 350

## Description

### BACKGROUND OF THE INVENTION

### 1. FIELD OF INVENTION

This invention relates to coating processes for coating mineral-entrained polymers and the final products of the same. More particularly, the invention relates to coatings applied to plastic parts having a high mineral loading to prevent release or dusting of the minerals without significantly affecting moisture or other gas uptake of the entrained polymer.

### 2. DESCRIPTION OF RELATED ART

There are many items that are preferably stored, shipped and/or utilized in an environment that must be controlled and/or regulated. For example, in the moisture control field, containers and/or packages having the ability to absorb excess moisture trapped therein have been recognized as desirable. The control of moisture, oxygen, ethylene and other gaseous substances may be desirable in medical, electronics and food packaging applications.

Conventionally, desiccants, oxygen absorbers and other active agents have been used in raw form, e.g., as loose particulates housed in sachets or canisters within packaging, to control the internal environment of the package. For many applications, it is not desired to have such loosely stored active substances. To address this problem, the assignee of the present patent had developed active entrained polymers comprising active agents, wherein such polymers can be extruded and/or molded into desired forms, e.g., container liners, plugs, film sheets, pellets and other such structures. Optionally, such active entrained polymers may include channeling agents, such as polyethylene glycol (PEG), which form channels between the surface of the entrained polymer and its interior to transmit a selected material (e.g., moisture) to the entrained active agent (e.g., desiccant to absorb the moisture). Entrained polymers may be two phase formulations (i.e., comprising a base polymer and active agent, without a channeling agent) or three phase formulations (i.e., comprising a base polymer, active agent and channeling agent). Entrained polymers and methods for making the same are described, for example, in U.S. Pat. Nos. 5,911,937, 6,080,350, 6,124,006, 6,130,263, 6,194,079, 6,214,255, 6,486,231, 7,005,459, and U.S. Pat. Pub. No. 2016/0039955.

Often, entrained active agents are in mineral form. For example, desiccants such as silica gel, molecular sieve and bentonite clay are often used as entrained active agents to absorb moisture. Mineral-entrained polymers can show significant friability or mineral release/dusting in downstream processes, such as feeding in vibration bowls. One way to address such friability or mineral release/dusting is by overmolding with a suitable plastic to envelop and thus trap such minerals. However, where the mineral serves as an active agent within the polymer, such overmolding would disadvantageously inhibit transmission of gas to/from such entrained active agents. For example, if the mineral is a desiccant that is entrained in the polymer, overmolding could inhibit the moisture uptake of the polymer and thereby prevent the desiccant from absorbing moisture as it is supposed to do.

Another consideration for some applications is uniformity of color and homogeneity of appearance of the entrained polymer mixture. This is not a problem for white parts in which the mineral is visually imperceptible compared to a white base polymer. For example, where molecular sieve or silica gel is loaded in white plastic, the desiccant is visually indistinguishable from the white polymer in which it is entrained. However, where colorants are introduced to the formulation, de-mixing of the colorants in the entrained polymer can occur, thereby preventing uniform color of a molded component from being achieved. Overmolding can solve this problem. However, as explained above, overmolding disadvantageously inhibits gas transmission through the polymer, thereby preventing the active agent from doing its job.

There thus exists a need for a mineral loaded polymer that is preferably less friable and preferably less susceptible to dusting or release of entrained minerals. There is also a need for a colored mineral loaded polymer that is homogeneous in color and appearance.

### BRIEF SUMMARY OF THE INVENTION

Accordingly, in one aspect, a method for reducing friability and/or mineral dusting of a mineral loaded polymer is provided. The method includes providing a mineral loaded polymer article made from a monolithic material formed of at least a base polymer and an active agent. Optionally a channeling agent is included within the mineral loaded polymer. The active agent is comprises minerals, and is selected from the group consisting of absorbing, adsorbing and releasing materials, e.g., desiccant materials. The article has a surface onto which a film coating is applied using a liquid solution comprising a non-aqueous solvent and a coating base that solidifies on the surface to form the film coating. The coating base is a member selected from the group consisting of: acrylate-copolymers, non-ionic cellulose, acidic cellulose, polycarbophil, polyvinylpyrrolidone, shellac and a combination of two or more of the foregoing. The film coating substantially prevents release of the minerals outside of the article while at the same time provides gas permeability to facilitate transmission of a gas between an environment external to the film coating and the minerals loaded within the article.

In another aspect, a coated article is provided which comprises a mineral loaded polymer article. The mineral loaded polymer article includes a monolithic material formed of at least a base polymer and an active agent. The active agent is comprises minerals and is selected from the group consisting of absorbing, adsorbing and releasing materials,, e.g., desiccant materials. The article has a surface. The article further includes a film coating disposed on the surface. The film coating is made from a coating base which is a member selected from the group consisting of: acrylate-copolymers, non-ionic cellulose, acidic cellulose, polycarbophil, polyvinylpyrrolidone, shellac and a combination of two or more of the foregoing. The film coating substantially prevents release of the minerals outside of the article while at the same time provides gas permeability to facilitate transmission of a gas between an environment external to the film coating and the minerals loaded within the article. Optionally, in any embodiment, the film coating reduces the friability of the entrained polymer article.

Optionally, in any embodiment, the film includes a pigment or colorant other than pure white to give the entrained polymer article a uniformly colored visual appearance.

Optionally, in any embodiment, the entrained polymer article is a plug, a sleeve, a liner or a puck.

Optionally, in any embodiment, the entrained polymer article is a film, optionally having a thickness of 0.1mm to 1.0 mm.

Optionally, in any embodiment, the entrained polymer article is a cap of a container. Optionally, such container is in the form of a straw and the cap of the container has a portion that is press-fit into an opened end of the cap. Optionally, the cap has a uniform color other than pure white. Optionally, the entrained mineral in the cap is a desiccant, which provides a desired moisture level within the container when closed to preserve quality of a product stored therein.

Optionally, in any embodiment, the film coating comprises carnauba wax.

Optionally, in any embodiment, the film coating comprises a copolymer methacrylate in a solution (e.g., Eudragit RL 12.5), combined with triethylcitrate, talc and red iron oxide.

Optionally, in any embodiment, the coating solution is nonaqueous and contains raw materials soluble in class 3 solvents according to ICH Q3C (low toxic potential). Optionally, solvents for the coating solution include ethanol, 2-Propanol, Acetone, Pentane and Ethyl Acetate. Optionally, coating bases for the coating solution include Acrylate-Copolymers (e.g., Eudragit RL), non-ionic Cellulose (EC, HPC, HPMC) and acidic Cellulose (CAP), Polycarbophil (-Cysteine), Polyvinylpyrrolidone and Shellac. These coating bases are soluble in the aforementioned solvents or mixtures thereof.

Optionally, in any embodiment, the entrained minerals make up 40% to 70% by weight of the total weight of the entrained polymer.

### BRIEF DESCRIPTION OF SEVERAL VIEWS OF THE DRAWINGS

The invention will be described in conjunction with the following drawings in which like reference numerals designate like elements and wherein:
Fig. 1 is a perspective view of a plug formed of an entrained polymer according to an optional embodiment of the present invention.
Fig. 2 is a cross section taken along line 2-2 of Fig. 1;
Fig. 3 is a cross section similar to that of Fig. 2, showing a plug formed of another embodiment of an entrained polymer according to an optional embodiment of the present invention;
Fig. 4 is a schematic illustration of an entrained polymer according to an optional embodiment of the present invention, in which the active agent is an absorbing or adsorbing material.
Fig. 5 is a cross sectional view of a sheet formed of an entrained polymer according to an optional embodiment of the present invention, adhered to a barrier sheet substrate;
Fig. 6 is a cross section of a package that may be formed using an entrained polymer according to an optional embodiment of the present invention.
Fig. 7 is a graph showing comparative moisture uptake data between coated and uncoated desiccant entrained articles.
Fig. 8 is an image generated by scanning electron microscopy showing a comparatively thicker section of a film coating on a desiccant entrained polymer sample.
Fig. 9 is an image generated by scanning electron microscopy showing a comparatively thinner section of a film coating on a desiccant entrained polymer sample.

### DETAILED DESCRIPTION OF PREFERRED EMBODIMENTS OF THE INVENTION

### Definitions

As used herein, the term "active" is defined as capable of acting on, interacting with or reacting with a selected material (e.g., moisture or oxygen) according to the invention. Such actions or interactions include absorption, adsorption or release of the selected material.

As used herein, the term "active agent" is defined as a material that (1) is immiscible with the base polymer and when mixed and heated with the base polymer and the channeling agent, will not melt, i.e., has a melting point that is higher than the melting point for either the base polymer or the channeling agent, and (2) acts on, interacts or reacts with a selected material. The term "active agent" pertains to materials that absorb, adsorb or release the selected material(s). Active agents according to the invention may be in the form of particles, preferably minerals, but the invention should generally not be viewed as limited only to particulate active agents (unless a respective claim recites otherwise).

As used herein, the term "base polymer" is defined as a polymer optionally having a gas transmission rate of a selected material that is substantially lower than or lower than that of the channeling agent. By way of example, such a transmission rate would be a water vapor transmission rate in embodiments where the selected material is moisture and the active agent is a water absorbing desiccant. The primary function of the base polymer is to provide structure for the entrained polymer. Suitable base polymers may include thermoplastic polymers, e.g., polyolefins such as polypropylene and polyethylene, polyisoprene, polybutadiene, polybutene, polysiloxane, polycarbonates, polyamides, ethylene-vinyl acetate copolymers, ethylene-methacrylate copolymer, poly(vinyl chloride), polystyrene, polyesters, polyanhydrides, polyacrylonitrile, polysulfones, polyacrylic ester, acrylic, polyurethane and polyacetal, or copolymers or mixtures thereof.

Referring to such a comparison of the base polymer and channeling agent water vapor transmission rate, in one embodiment, the channeling agent has a water vapor transmission rate of at least two times that of the base polymer. In another embodiment, the channeling agent has a water vapor transmission rate of at least five times that of the base polymer. In another embodiment, the channeling agent has a water vapor transmission rate of at least ten times that of the base polymer. In still another embodiment, the channeling agent has a water vapor transmission rate of at least twenty times that of the base polymer. In still another embodiment, the channeling agent has a water vapor transmission rate of at least fifty times that of the base polymer. In still another embodiment, the channeling agent has a water vapor transmission rate of at least one hundred times that of the base polymer.

As used herein, the term "channeling agent" or "channeling agents" is defined as a material that is immiscible with the base polymer and has an affinity to transport a gas phase substance at a faster rate than the base polymer. Optionally, a channeling agent is capable of forming channels through the entrained polymer when formed by mixing the channeling agent with the base polymer. Optionally, such channels are capable of transmitting a selected material through the entrained polymer at a faster rate than in solely the base polymer.

As used herein, the term "channels" or "interconnecting channels" is defined as passages formed of the channeling agent that penetrate through the base polymer and may be interconnected with each other.

As used herein, the term "entrained polymer" is defined as a monolithic material formed of at least a base polymer with an active agent and optionally also a channeling agent entrained or distributed throughout. An entrained polymer thus includes two-phase polymers and three phase polymers. A "mineral loaded polymer" is a type of entrained polymer, wherein the active agent is in the form of minerals, e.g., mineral particles such as molecular sieve or silica gel.

As used herein, the term "monolithic," "monolithic structure" or "monolithic composition" is defined as a composition or material that does not consist of two or more discrete macroscopic layers or portions. Accordingly, a "monolithic composition" does not include a multi-layer composite.

As used herein, the term "phase" is defined as a portion or component of a monolithic structure or composition that is uniformly distributed throughout, to give the structure or composition it's monolithic characteristics.

As used herein, the term "selected material" is defined as a material that is acted upon by, or interacts or reacts with an active agent and is capable of being transmitted through the channels of an entrained polymer. For example, in embodiments in which a desiccant is used as an active agent, the selected material may be moisture or a gas that can be absorbed by the desiccant. In embodiments in which a releasing material is used as an active agent, the selected material may be an agent released by the releasing material, such as moisture, fragrance, or an antimicrobial agent. In embodiments in which an adsorbing material is used as an active agent, the selected material may be certain volatile organic compounds and the adsorbing material may be activated carbon.

As used herein, the term "three phase" is defined as a monolithic composition or structure comprising three or more phases. An example of a three phase composition according to the invention would be an entrained polymer formed of a base polymer, active agent, and channeling agent. Optionally, a three phase composition or structure may include an additional phase, e.g., a colorant.

### Exemplary Entrained Polymers

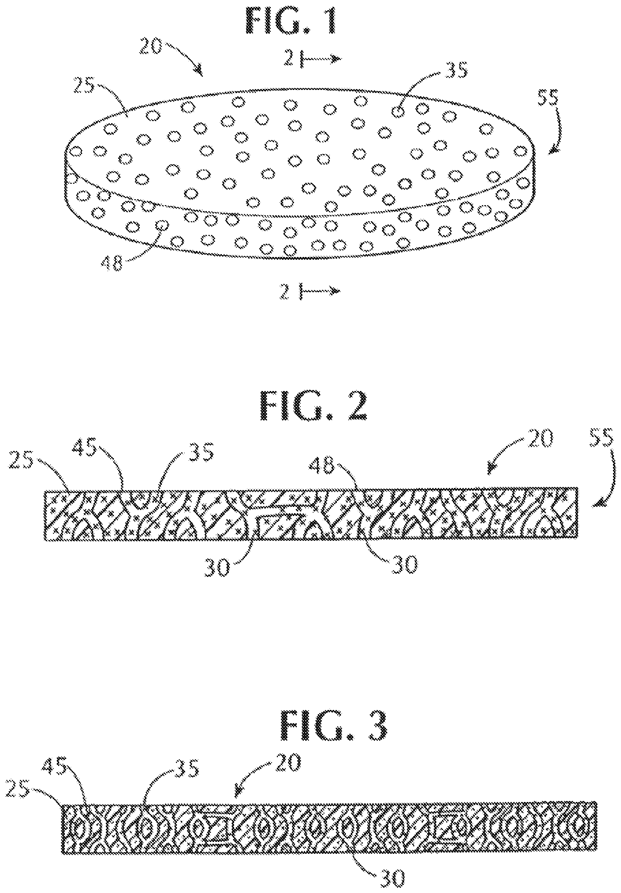

Figs. 1-6 illustrate exemplary entrained polymers 10 and various packaging assemblies formed of entrained polymers according to the invention. The entrained polymers 10 each include a base polymer 25, a channeling agent 35 and an active agent 30. As shown, the channeling agent 35 forms interconnecting channels 45 through the entrained polymer 10. At least some of the active agent 30 is contained within these channels 45, such that the channels 45 communicate between the active agent 30 and the exterior of the entrained polymer 10 via channel openings 48 formed at outer surfaces of the entrained polymer 25. The active agent 30 can be, for example, any one of a variety of absorbing, adsorbing or releasing materials, as described in further detail below. While a channeling agent, e.g., 35, is preferred, the invention broadly includes entrained polymers that optionally do not include channeling agents.

Suitable channeling agents may include a polyglycol such as polyethylene glycol (PEG), ethylene-vinyl alcohol (EVOH), polyvinyl alcohol (PVOH), glycerin polyamine, polyurethane and polycarboxylic acid including polyacrylic acid or polymethacrylic acid. Alternatively, the channeling agent 35 can be, for example, a water insoluble polymer, such as a propylene oxide polymerisate-monobutyl ether, such as Polyglykol B01/240, produced by CLARIANT. In other embodiments, the channeling agent could be a propylene oxide polymerisate monobutyl ether, such as Polyglykol B01/20, produced by CLARIANT, propylene oxide polymerisate, such as Polyglykol D01/240, produced by CLARIANT, ethylene vinyl acetate, nylon 6, nylon 66, or any combination of the foregoing.

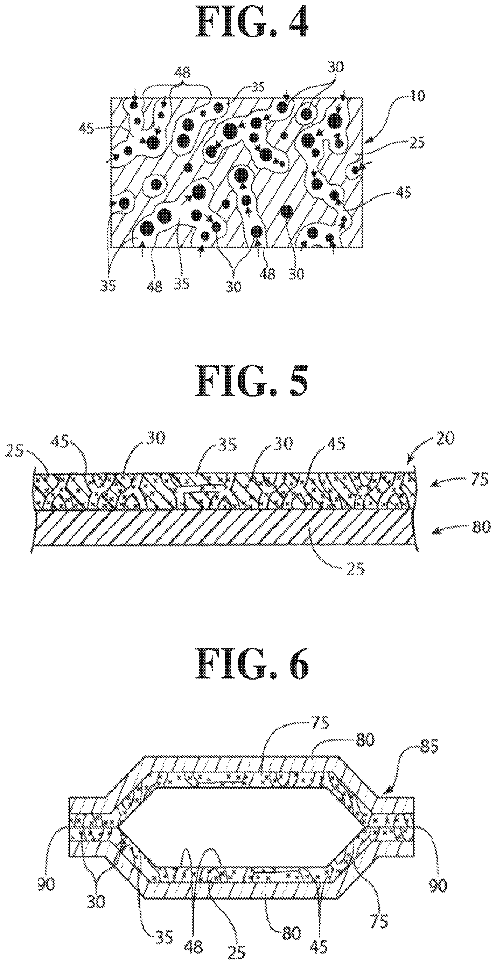

Suitable active agents according to the invention include absorbing materials, such as desiccating compounds. Fig. 4 illustrates an embodiment of an entrained polymer 10 according to the invention, in which the active agent 30 is an absorbing or adsorbing material. The arrows indicate the path of the selected material, for example moisture or gas, from an exterior of the entrained polymer 10, through the channels 45, to the particles of active agent 30, which absorb or adsorb the selected material.

If the active agent is a desiccant, any suitable desiccant for a given application may be used. Typically, physical absorption desiccants are preferred for many applications. These may include molecular sieves, silica gels, clays and starches. Alternatively, the desiccant may be a chemical compound that forms crystals containing water or compounds which react with water to form new compounds.

Optionally, in any embodiment, the active agent may be an oxygen scavenger.

Suitable absorbing materials may also include: (1) metals, semi-metals and alloys such as nickel, copper, aluminum, silicon, solder, silver, gold; (2) metal-plated particulates such as silver-plated copper, silver-placed nickel, silver-plated glass microspheres; (3) inorganics such as BaTiO₃, SrTiO₃, SiO₂, Al₂O₃, ZnO, TiO₂, MnO, CuO, Sb₂O₃, WC, fused silica, fumed silica, amorphous fused silica, sol-gel silica, sol-gel titanates, mixed titanates, ion exchange resins, ceramics such as lithium-containing ceramics, hollow glass microspheres; (4) carbon-based materials such as carbon, activated charcoal, carbon black, ketchem black, diamond powder.

In another example, the absorbing material may be a carbon dioxide scavenger, such as calcium oxide. In the presence of moisture and carbon dioxide, the calcium oxide is converted to calcium carbonate. Accordingly, calcium oxide may be used as the absorbing material in applications where absorption of carbon dioxide is needed. Such applications include preserving fresh foods (e.g., fruits and vegetables) that give off carbon dioxide.

Other suitable active agents according to the invention include releasing materials. Such materials may comprise any suitable material that will release the selected material from the releasing material. The selected material released from the releasing material could be in the form of a solid, gel, liquid or gas. These substances can perform a variety of functions including: serving as a fragrance, flavor, or perfume source; supplying a biologically active ingredient such as pesticide, pest repellent, antimicrobials, bait, aromatic medicines, etc.; providing humidifying or desiccating substances; delivering air-borne active chemicals, such as corrosion inhibitors; ripening agents and odor-making agents.

Suitable biocides for use as releasing materials in the entrained polymers of the present invention may include pesticides, herbicides, nematicides, fungicides, rodenticides and/or mixtures thereof. In addition to the biocides, the article of the present invention can also release nutrients, plant growth regulators, pheromones, defoliants and/or mixture thereof.

Quaternary ammonium compounds can also be used as releasing materials according to the invention. Such compounds not only function as surfactants, but also impart to the surface of the entrained polymer aseptic properties or establish conditions for reducing the number of microbial organisms, some of which can be pathogenic. Numerous other antimicrobial agents, such as benzalkonium chloride and related types of compounds as hexachlorophene, may also be used as releasing agents according to the invention. Other antimicrobial agents, such as chlorine dioxide releasing agents may be used.

Other potential releasing materials include fragrances, including natural, essential oils and synthetic perfumes, and blends thereof. Typical perfumery materials which may form part of the active ingredient include: natural essential oils such as lemon oil, mandarin oil, clover leaf oil, petitgrain oil, cedar wood oil, patchouli oil, lavandin oil, neroli oil, ylang oil, rose absolute or jasmine absolute; natural resins such as labdanum resin or olibanum resin; single perfumery chemicals which may be isolated from natural sources or manufactured synthetically, as for example alcohols such as geraniol, nerol, citronellol, linalol, tetrahydrogeraniol, betaphenylethyl alcohol, methyl phenyl carbinol, dimethyl benzyl carbinol, menthol or cedrol; acetates and other esters derived from such alcohols; aldehydes such as citral, citronellal, hydroxycitronellal, lauric aldehyde, undecylenic aldehyde, cinnamaldehyde, amyl cinnamic aldehyde, vanillin or heliotropin; acetals derived from such aldehydes; ketones such as methyl hexyl ketone, the ionones and methylionones; phenolic compounds such as eugenol and isoeugenol; synthetic musks such as musk xylene, musk ketone and ethylene brassylate.

It is believed that the higher the active agent concentration in the mixture, the greater the absorption, adsorption or releasing capacity (as the case may be) will be of the final composition. However, too high an active agent concentration could cause the entrained polymer to be more brittle and the molten mixture of active agent, base polymer and channeling agent to be more difficult to either thermally form, extrude or injection mold. In one embodiment, the active agent loading level can range from 10% to 80%, preferably 40% to 70%, more preferably from 40% to 60%, and even more preferably from 45% to 55% by weight with respect to the total weight of the entrained polymer. Optionally, channeling agent may be provided in a range of 2% to 10% by weight, preferably about 5%. Optionally, the base polymer may range from 10% to 50% by weight of the total composition, preferably from 20% to 35% by weight. Optionally, a colorant is added, e.g., at about 2% by weight of the total composition.

Referring to FIG. 1, an insert 20, constructed from the entrained polymer of the present invention is illustrated. The insert 20 is in the form of a plug 55 that may be deposited into a container.

Referring to FIG. 2, a cross-sectional view is shown of the plug 55 that has been constructed from an entrained polymer 10 comprising the base polymer 25 that has been uniformly blended with the active agent 30 and the hydrophilic agent or channeling agent 35. In the illustration of FIG. 2, the entrained polymer has been solidified so that interconnecting channels 45 have formed throughout the entrained polymer 10 to establish passages throughout the solidified plug 55. As may be appreciated from both FIGS. 1 and 2, the passages terminate in channel openings 48 at exterior surfaces of the plug 55.

FIG. 3 illustrates the embodiment of a plug 55 similar in construction and makeup to the plug 55 of FIG. 2, where interconnecting channels 45 are very fine compared to those of FIG. 2. This can result from the use of a dimer agent (i.e., a plasticizer) together with a channeling agent 35. The dimer agent may enhance the compatibility between the base polymer 25 and the channeling agent 35. This enhanced compatibility is facilitated by a lowered viscosity of the blend, which may promote a more thorough blending of the base polymer 25 and channeling agent 35, which under normal conditions can resist combination into a uniform solution. Upon solidification of the entrained polymer 10 having a dimer agent added thereto, the interconnecting channels 45 which are formed therethrough have a greater dispersion and a smaller porosity, thereby establishing a greater density of interconnecting channels throughout the plug 55.

Interconnecting channels 45, such as those disclosed herein, facilitate transmission of a desired material, such as moisture, gas or odor, through the base polymer 25, which generally resists permeation of these materials, thus acting as a barrier thereto. For this reason, the base polymer 25 itself acts as a barrier substance within which an active agent 30 may be entrained. The interconnecting channels 45 formed of the channeling agent 35 provide pathways for the desired material to move through the entrained polymer 10. Without these interconnecting channels 45, it is believed that relatively small quantities of the desired material would be transmitted through the base polymer 25 to or from the active agent 30. In the case in which the desired material is transmitted to the active agent 30, it may be absorbed by the active agent 30, for example in embodiments in which the active agent 30 is an active agent such as a desiccant or an oxygen absorber. In the case in which the desired material is transmitted from the active agent 30, it may be released from the active agent 30, for example in embodiments in which the active agent 30 is a releasing material, such as a fragrance or gas releasing material.

FIG. 5 illustrates an active sheet 75 formed of the entrained polymer 10 used in combination with a barrier sheet 80 to form a composite, according to an aspect of the invention. The characteristics of the active sheet 75 are similar to those described with respect to the plug 55. The barrier sheet 80 may be a substrate such as foil and/or a polymer with low moisture or oxygen permeability. The substrate 80 is compatible with the active sheet 75 and is thus configured to thermally bond to the active sheet 75, when the active sheet solidifies after dispensing, as discussed below. FIG. 6 illustrates an embodiment in which the two sheets 75, 80 are combined to form a packaging wrap having active characteristics at an interior surface formed by the entrained polymer 10 active sheet 75, and vapor resistant characteristics at an exterior surface formed by the barrier sheet or substrate 80.

In one embodiment, the sheets of FIG. 5 are joined together to form an active package 85, as shown in FIG. 6. As shown, two laminates or composites are provided, each formed of an active sheet 75 joined with a barrier sheet 80. The sheet laminates are stacked, with the active sheets 75 facing one another, so as to be disposed on an interior of the package, and are joined at a sealing region 90, formed about a perimeter of the sealed region of the package interior.

### Exemplary Processes and Equipment for Coating Entrained Polymers

In one aspect, the invention is directed to processes for applying coatings to external surfaces of mineral loaded polymers. Such coatings are in the form of film coatings that are initially provided in a solution and applied to the surfaces of a mineral loaded polymer. The film coating should entrap the minerals loaded within the polymer to prevent release or dusting of the minerals, while at the same time allowing for desired levels of gas transmission between the ambient environment and the entrained polymer. This function would be dictated by the characteristics and thickness of the film coating.

The coating is preferably provided in a pre-applied state in the form of a liquid solution. The coating solution in certain applications should be food grade and/or pharmaceutical grade. Preferably, the coating solution is not water-based and contains raw materials soluble in class 3 solvents according to ICH Q3C (low toxic potential). Optional solvents for the coating solution include ethanol, 2-Propanol, Acetone, Pentane and Ethyl Acetate. Optional coating bases are Acrylate-Copolymers (e.g., Eudragit RL), non-ionic Cellulose (EC, HPC, HPMC) and acidic Cellulose (CAP), Polycarbophil (-Cysteine), Polyvinylpyrrolidone and Shellac. These coating bases are soluble in the aforementioned solvents or mixtures thereof.

Optionally a colorant or pigment may be included in the solution.

The coating base is dissolved in a suitable solvent or solvent mixture to form the coating solution. This coating solution is then applied to the mineral entrained polymer substrate through one of the following optional application methods: spray coating (e.g., with a pharmaceutical coater), dip coating or flooding. Solvents may be dried off using industrial drying equipment. The final product is a coated mineral loaded polymer having reduced friability and reduced mineral particle dusting.

If spray coating is the chosen method of applying the coating, existing pharmaceutical spray coating equipment may be utilized, although it could require some customization for this application. Such equipment may include, for example: the GCC Coater, GC Smart and Multi-Pan Coater by Glatt GmbH.

Optionally, a coating is prepared comprising a solution of the following components: Hexamethylene diacrylate, hydroxypropyl acrylate, 4,4'-Isopropylidenediphenol, polymer with 1-chloro-2,3-epoxypropane and propane-1,2-diol acrylate and succinic anhydride. A UV varnish may be provided, e.g. a special binder from Marabu. A fusion UV LC6B benchtop conveyor may be used to coat entrained polymer articles. The varnish may be applied on the articles and then placed on a conveyor of the UV machine for UV curing. Paint brushes, for example, may be used to manually coat the varnish on the articles.

In one aspect, the invention is directed to a method for coating a mineral loaded polymer using any of the aforementioned solutions and processes. In another aspect, the invention is directed to a mineral loaded polymer article, e.g., the plug 55 of FIG. 1, which is coated according to any of the aforementioned solutions and processes. In another aspect, the invention is directed to a mineral loaded polymer article, e.g., the plug 55 of Fig. 1, that is coated with a film, wherein the film prevents release of the loaded minerals outside of the polymer while at the same time providing gas permeability to facilitate transmission of a selected material (e.g., gas) to the minerals loaded within the polymer.

The invention will be illustrated in more detail with reference to the following Examples, but it should be understood that the present invention is not deemed to be limited thereto.

### EXAMPLES

### Example 1

Samples of desiccant entrained polymer articles sold under the name PHARMAPUCK by CSP Technologies, Inc., were coated with a film coating. In this instance, the samples were coated with a formulation comprising EUDRAGIT RL 12.5. The EUDRAGIT RL 12.5 contained 12.5 wt. % copolymer methacrylate in a liquid solute that itself was 60 wt. % isopropanol and 40% acetone, forming a solution. Triethylcitrate, talc and red iron oxide were added to this solution to make the liquid solution that was used to deposit a film coating on the external surface of the article. A laboratory drum coater was used to apply the liquid solution to the article samples. A rotated drum of the coater was filled with the samples and a spray pipe sprayed the solution onto the samples. The film coating amounted to about 3.2% by weight of each sample. Upon completion of the process and drying of the solution on the external surfaces of the samples, the film coatings appeared visually uniform on the samples.

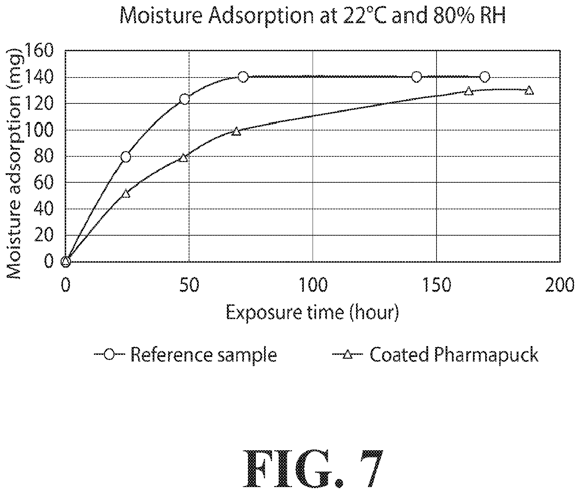

Coated and uncoated samples were then subjected to moisture adsorption testing under conditions of 20°C at 80% relative humidity (RH). Fig. 7 shows a comparative absorption curve over a period of about 180 hours between uncoated and coated samples. As shown, the uncoated samples had a slightly slower uptake of moisture compared to the uncoated samples, but nearly absorbed the same amount of moisture after about 160 days. Accordingly, this test demonstrated that the coated entrained desiccant polymers were indeed effective moisture absorbers.

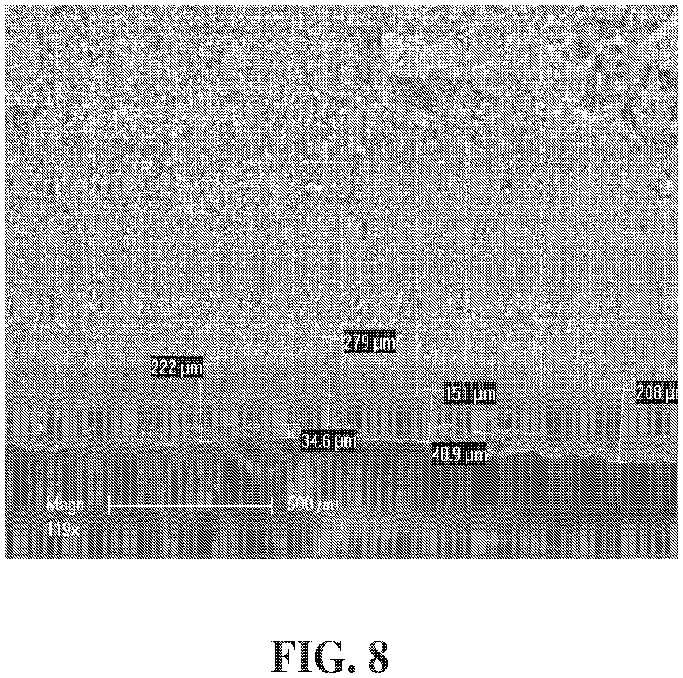

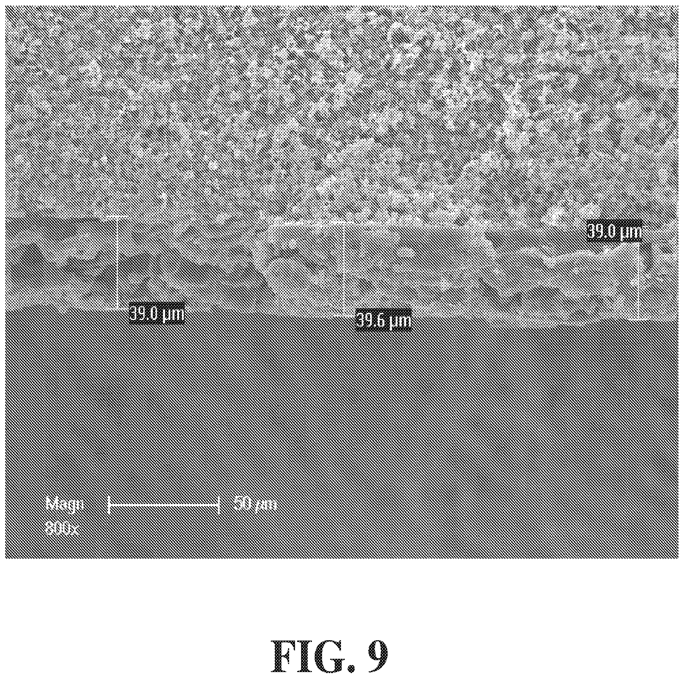

Film coating thickness was measured using scanning electron microscopy (SEM). A clear thickness delimitation was observed between the film coating and the desiccant entrained polymer sample, as shown in SEM generated images shown in Figs. 8 and 9. The SEM testing showed that the thickness of the film coating ranged generally from about 20 µm (see Fig. 9) to about 280 µm (see Fig. 8). Specifically, the SEM generated images show a maximum thickness of 279 µm in Fig. 8 and a generally consistent thickness of 39.0 µm in Fig. 9. Coating thickness may be modified to achieve a desired moisture uptake.

## Claims

1. A method for reducing friability and/or mineral dusting of a mineral loaded polymer, the method comprising the steps of:
a. providing a mineral loaded polymer article comprising a monolithic material (10) formed of at least a base polymer (25) and an active agent (30) comprising minerals, the active agent being selected from the group consisting of absorbing, adsorbing and releasing materials, the article having a surface; and
b. applying a film coating onto the surface using a liquid solution comprising a non-aqueous solvent and a coating base that solidifies on the surface to form the film coating, wherein the coating base is a member selected from the group consisting of: acrylate-copolymers, non-ionic cellulose, acidic cellulose, polycarbophil, polyvinylpyrrolidone, shellac and a combination of two or more of the foregoing, and wherein the film coating substantially prevents release of the minerals outside of the article while at the same time providing gas permeability to facilitate transmission of a gas between an environment external to the film coating and the minerals loaded within the article.

2. The method of claim 1, wherein the monolithic material comprises a channeling agent (35), which forms channels (45) through the monolithic material, is immiscible with the base polymer and is capable to transport a gas phase substance at a faster rate than the base polymer.

3. The method of any previous claim, wherein the active agent is a desiccant, optionally a molecular sieve, a silica gel or a clay.

4. The method of claim 3, wherein the gas is moisture.

5. The method of any previous claim, wherein the mineral loading level is from 40% to 70% by weight of the monolithic material.

6. The method of any previous claim, wherein the liquid solution comprises a pigment or colorant configured to provide a color other than pure white to the surface, wherein the surface is homogeneous in color and appearance.

7. The method of any previous claim, wherein the solvent is a member selected from the group consisting of: ethanol, 2-propanol, acetone, pentane, ethyl acetate and a combination of two or more of the foregoing.

8. The method of any previous claim, wherein the liquid solution comprises a copolymer methacrylate, triethylcitrate, talc and red iron oxide.

9. A coated article comprising:
a. a mineral loaded polymer article comprising a monolithic material (10) formed of at least a base polymer (25) and an active agent (30) comprising minerals, the active agent being selected from the group consisting of absorbing, adsorbing and releasing materials, the article having a surface; and
b. a film coating disposed on the surface, wherein the film coating is made from a coating base which is a member selected from the group consisting of: acrylate-copolymers, non-ionic cellulose, acidic cellulose, polycarbophil, polyvinylpyrrolidone, shellac and a combination of two or more of the foregoing, and wherein the film coating substantially prevents release of the minerals outside of the article while at the same time providing gas permeability to facilitate transmission of a gas between an environment external to the film coating and the minerals loaded within the article.

10. The coated article of claim 9, wherein the monolithic material comprises a channeling agent, which forms channels (45) through the monolithic material, is immiscible with the base polymer and is capable to transport a gas phase substance at a faster rate than the base polymer.

11. The coated article of any of claims 9 to 10, wherein the active agent is a desiccant, optionally a molecular sieve, a silica gel or a clay.

12. The coated article of any of claims 9 to 11, wherein the mineral loading level is from 40% to 70% by weight of the monolithic material.

13. The coated article of any of claims 9 to 12, wherein the film coating comprises a pigment or colorant configured to provide a color other than pure white to the surface, and wherein the surface is homogeneous in color and appearance.

14. The coated article of any of claims 9 to 13, wherein the film coating comprises a copolymer methacrylate, triethylcitrate, talc and red iron oxide.

## Patentansprüche

1. Verfahren zum Verringern der Friabilität und/oder Mineralstaubbildung eines mit Mineralen beladenen Polymers, wobei das Verfahren die folgenden Schritte umfasst:
a. Bereitstellen eines mit Mineralen beladenen Polymerartikels, der ein monolithisches Material (10), das aus mindestens einem Basispolymer (25) und einem Minerale umfassenden Wirkstoff (30) gebildet ist, umfasst, wobei der Wirkstoff aus der Gruppe bestehend aus absorbierenden, adsorbierenden und freisetzenden Materialien ausgewählt ist und wobei der Artikel eine Oberfläche aufweist, und
b. Aufbringen einer Filmbeschichtung auf die Oberfläche unter Verwendung einer flüssigen Lösung, die ein nichtwässriges Lösungsmittel und eine Beschichtungsgrundlage, die sich auf der Oberfläche unter Bildung der Filmbeschichtung verfestigt, umfasst, wobei es sich bei der Beschichtungsgrundlage um ein Mitglied aus der Gruppe bestehend aus Acrylat-Copolymeren, nichtionischer Cellulose, saurer Cellulose, Polycarbophil, Polyvinylpyrrolidon, Schellack und einer Kombination von zwei oder mehr der Vorgenannten handelt und wobei die Filmbeschichtung im Wesentlichen die Freisetzung der Minerale aus dem Artikel verhindert, während gleichzeitig die Durchlässigkeit für Gase zur Erleichterung der Übertragung eines Gases zwischen einer externen Umgebung einer Filmbeschichtung und den Mineralen innerhalb des Artikels ermöglicht wird.

2. Verfahren nach Anspruch 1, wobei das monolithische Material ein Kanalisierungsmittel (35) umfasst, das Kanäle (45) durch das monolithische Material ausbildet, nicht mit dem Basispolymer mischbar ist und eine gasförmige Substanz mit einer schnelleren Rate als das Basispolymer transportieren kann.

3. Verfahren nach einem der vorhergehenden Ansprüche, wobei es sich bei dem Wirkstoff um ein Trockenmittel, gegebenenfalls ein Molekularsieb, ein Kieselgel oder einen Ton handelt.

4. Verfahren nach Anspruch 3, wobei es sich bei dem Gas um Feuchtigkeit handelt.

5. Verfahren nach einem der vorhergehenden Ansprüche, wobei der Mineralbeladungsgrad 40 bis 70 Gew.-%, bezogen auf das Gewicht des monolithischen Materials, ausmacht.

6. Verfahren nach einem der vorhergehenden Ansprüche, wobei die flüssige Lösung ein Pigment oder ein Farbmittel umfasst, das so ausgelegt ist, dass es der Oberfläche eine andere Farbe als reines Weiß verleiht, wobei die Oberfläche in Farbe und Aussehen homogen ist.

7. Verfahren nach einem der vorhergehenden Ansprüche, wobei es sich bei dem Lösungsmittel um ein Mitglied aus der Gruppe bestehend aus Ethanol, 2-Propanol, Aceton, Pentan, Ethylacetat und einer Kombination von zwei oder mehr der Vorgenannten handelt.

8. Verfahren nach einem der vorhergehenden Ansprüche, wobei die flüssige Lösung ein Methacrylat-Copolymer, Triethylcitrat, Talk und rotes Eisenoxid umfasst.

9. Beschichteter Artikel, umfassend:
a. einen mit Mineralen beladenen Polymerartikel, der ein monolithisches Material (10), das aus mindestens einem Basispolymer (25) und einem Minerale umfassenden Wirkstoff (30) gebildet ist, umfasst, wobei der Wirkstoff aus der Gruppe bestehend aus absorbierenden, adsorbierenden und freisetzenden Materialien ausgewählt ist und wobei der Artikel eine Oberfläche aufweist, und
b. eine auf der Oberfläche aufgebrachte Filmbeschichtung, wobei die Filmbeschichtung aus einer Beschichtungsgrundlage, bei der es sich um ein Mitglied aus der Gruppe bestehend aus Acrylat-Copolymeren, nichtionischer Cellulose, saurer Cellulose, Polycarbophil, Polyvinylpyrrolidon, Schellack und einer Kombination von zwei oder mehr der Vorgenannten handelt, hergestellt ist und wobei die Filmbeschichtung im Wesentlichen die Freisetzung der Minerale aus dem Artikel verhindert, während gleichzeitig die Durchlässigkeit für Gase zur Erleichterung der Übertragung eines Gases zwischen einer externen Umgebung der Filmbeschichtung und den Mineralen innerhalb des Artikels ermöglicht wird.

10. Beschichteter Artikel nach Anspruch 9, wobei das monolithische Material ein Kanalisierungsmittel umfasst, das Kanäle (45) durch das monolithische Material ausbildet, nicht mit dem Basispolymer mischbar ist und eine gasförmige Substanz mit einer schnelleren Rate als das Basispolymer transportieren kann.

11. Beschichteter Artikel nach einem der Ansprüche 9 bis 10, wobei es sich bei dem Wirkstoff um ein Trockenmittel, gegebenenfalls ein Molekularsieb, ein Kieselgel oder einen Ton handelt.

12. Beschichteter Artikel nach einem der Ansprüche 9 bis 11, wobei der Mineralbeladungsgrad 40 bis 70 Gew.-%, bezogen auf das Gewicht des monolithischen Materials, beträgt.

13. Beschichteter Artikel nach einem der Ansprüche 9 bis 12, wobei die Filmbeschichtung ein Pigment oder ein Farbmittel, das so ausgelegt ist, dass es der Oberfläche eine andere Farbe als reines Weiß verleiht, umfasst und wobei die Oberfläche in Farbe und Aussehen homogen ist.

14. Beschichteter Artikel nach einem der Ansprüche 9 bis 13, wobei die Filmbeschichtung ein Methacrylat-Copolymer, Triethylcitrat, Talk und rotes Eisenoxid umfasst.

## Revendications

1. Procédé de réduction de la friabilité et/ou du poudrage minéral d'un polymère chargé de minéraux, le procédé comprenant les étapes de :
a. fourniture d'un article en polymère chargé de minéraux comprenant un matériau monolithique (10) formé d'au moins un polymère de base (25) et d'un agent actif (30) comprenant des minéraux, l'agent actif étant choisi dans le groupe constitué de matériaux d'absorption, d'adsorption et de libération, l'article ayant une surface ; et
b. application d'un pelliculage sur la surface au moyen d'une solution liquide comprenant un solvant non aqueux et une base de revêtement qui solidifie sur la surface pour former le pelliculage, la base de revêtement étant un membre choisi dans le groupe constitué de : copolymères d'acrylate, cellulose non ionique, cellulose acide, polycarbophil, polyvinylpyrrolidone, gomme laque et une combinaison de deux ou plus parmi ceux-ci, et dans lequel le pelliculage empêche sensiblement la libération des minéraux à l'extérieur de l'article tout en conférant simultanément une perméabilité aux gaz pour permettre la transmission d'un gaz entre un environnement externe au pelliculage et les minéraux chargés dans l'article.

2. Procédé selon la revendication 1, dans lequel le matériau monolithique comprend un agent de canalisation (35), qui forme des canaux (45) à travers le matériau monolithique, est non miscible avec le polymère de base et est capable de transporter une substance en phase gazeuse à une vitesse plus rapide que le polymère de base.

3. Procédé selon l'une quelconque des revendications précédentes, dans lequel l'agent actif est un déshydratant, facultativement un tamis moléculaire, un gel de silice ou une argile.

4. Procédé selon la revendication 3, dans lequel le gaz est de l'humidité.

5. Procédé selon l'une quelconque des revendications précédentes, dans lequel le taux de charge minérale est de 40 % à 70 % en poids du matériau monolithique.

6. Procédé selon l'une quelconque des revendications précédentes, dans lequel la solution liquide comprend un pigment ou un colorant configuré pour conférer une couleur autre que le blanc pur à la surface, dans lequel la surface est homogène en termes de couleur et d'aspect.

7. Procédé selon l'une quelconque des revendications précédentes, dans lequel le solvant est un membre choisi dans le groupe constitué des : éthanol, 2-propanol, acétone, pentane, acétate d'éthyle et une combinaison de deux ou plus parmi ceux-ci.

8. Procédé selon l'une quelconque des revendications précédentes, dans lequel la solution liquide comprend un copolymère de méthacrylate, du citrate de triéthyle, du talc et de l'oxyde de fer rouge.

9. Article revêtu comprenant :
a. un article en polymère chargé de minéraux comprenant un matériau monolithique (10) formé d'au moins un polymère de base (25) et d'un agent actif (30) comprenant des minéraux, l'agent actif étant choisi dans le groupe constitué de matériaux d'absorption, d'adsorption et de libération, l'article ayant une surface ; et
b. un pelliculage disposé sur la surface, le pelliculage étant constitué d'une base de revêtement qui est un membre choisi dans le groupe constitué de : copolymères d'acrylate, cellulose non ionique, cellulose acide, polycarbophil, polyvinylpyrrolidone, gomme laque et une combinaison de deux ou plus parmi ceux-ci, et dans lequel le pelliculage empêche sensiblement la libération des minéraux à l'extérieur de l'article tout en conférant simultanément une perméabilité aux gaz pour permettre la transmission d'un gaz entre un environnement externe au pelliculage et les minéraux chargés dans l'article.

10. Article revêtu selon la revendication 9, dans lequel le matériau monolithique comprend un agent de canalisation, qui forme des canaux (45) à travers le matériau monolithique, est non miscible avec le polymère de base et est capable de transporter une substance en phase gazeuse à une vitesse plus rapide que le polymère de base.

11. Article revêtu selon l'une quelconque des revendications 9 à 10, dans lequel l'agent actif est un déshydratant, facultativement un tamis moléculaire, un gel de silice ou une argile.

12. Article revêtu selon l'une quelconque des revendications 9 à 11, dans lequel le taux de charge minérale est de 40 % à 70 % en poids du matériau monolithique.

13. Article revêtu selon l'une quelconque des revendications 9 à 12, dans lequel le pelliculage comprend un pigment ou un colorant configuré pour conférer une couleur autre que le blanc pur à la surface, et dans lequel la surface est homogène en termes de couleur et d'aspect.

14. Article revêtu selon l'une quelconque des revendications 9 à 13, dans lequel le pelliculage comprend un copolymère de méthacrylate, du citrate de triéthyle, du talc et de l'oxyde de fer rouge.
